Europäisches Patentamt

European Patent Office

Office européen des brevets

(11) Veröffentlichungsnummer: **0 177 682**
**B1**

(12) # EUROPÄISCHE PATENTSCHRIFT

(45) Veröffentlichungstag der Patentschrift:
**17.11.88**

(21) Anmeldenummer: **85108629.8**

(22) Anmeldetag: **11.07.85**

(51) Int. Cl.⁴: **B 23 B 31/38**

(54) Überlastkupplung, insbesondere für Gewindeschneidfutter oder dergleichen.

(30) Priorität: **11.10.84 DE 3437269**

(43) Veröffentlichungstag der Anmeldung:
**16.04.86 Patentblatt 86/16**

(45) Bekanntmachung des Hinweises auf die Patenterteilung:
**17.11.88 Patentblatt 88/46**

(84) Benannte Vertragsstaaten:
**CH FR GB IT LI SE**

(56) Entgegenhaltungen:
**CH - A - 426 436**
**DE - B - 2 511 148**
**DE - C - 3 023 541**
**US - A - 3 702 546**

(73) Patentinhaber: **Emuge-Werk Richard Glimpel Fabrik für Präzisionswerkzeuge, Nürnberger Strasse 96-100, D-8560 Lauf (DE)**

(72) Erfinder: **Schmidt, Wolfgang, Südring 20, D-8560 Lauf (DE)**

(74) Vertreter: **Patentanwälte Czowalla . Matschkur + Partner, Dr.-Kurt-Schumacher-Strasse 23 Postfach 9109, D-8500 Nürnberg 11 (DE)**

## Beschreibung

Die Erfindung bezieht sich auf eine Überlastkupplung insbesondere für Gewindeschneidfutter oder deren Schnellwechseleinsätze, mit einem zylindrischen Kupplungsring und einem koaxial innerhalb des Kupplungsrings gehaltenen Futterkörper, mit einer zwischen der Innen-Mantelfläche des Kupplungsrings und der Aussen-Mantelfläche des Futterkörpers angeordneten Kugeltaschenkupplung mit einstellbarem auslösenden Drehmoment, wobei eine der Mantelflächen Kugeltaschen mit gegenüber dem Durchmesser der Kupplungskugeln geringer Tiefe aufweist, während in der Gegen-Mantelfläche Gegentaschen mit Ausrasterweiterungen vorgesehen sind, in welche die Kupplungskugeln bei Überlast gegen die Wirkung eines federbelasteten, axial im Kupplungsring verschiebaren, Druckrings in eine stabile Ausrastposition ausweichen können, siehe DE-B 25 11 148.

Derartige Überlastkupplungen werden beispielsweise bei Gewindeschneidfuttern oder hierfür vorgesehene Schnellwechseleinsätzen benötigt, um z.B. einen angetriebenen Gewindebohrer vor Bruch zu schützen, beispielsweise bei einem Auflaufen auf den Grund eines Sackloches oder aber bei stumpf gewordenen Gewindebohrer, wodurch eine höhere Drehmomentaufnahme bedingt ist.

Der Einfachheit halber wird im folgenden nur ein Futterkörper angesprochen, obgleich es jeweils auch ein Einsatz sein könnte.

Bei der aus der DE-B 25 11 148 bekannt gewordenen Überlastungskupplung ist die Kupplungshülse als Antriebshülse ausgebildet mit radial durchgehenden, die Gegentaschen bildenden schräggestellten Schlitzen versehen, wobei das Eindrücken der Kupplungskugeln in die kalottenförmigen Kugeltaschen der Aussen-Mantelfläche des durchgehenden Futterkörpers durch konische Ausbildung der Innenfläche des Druckrings erfolgt. Bei Überlast werden die Kupplungskugeln aus den Kugeltaschen herausgedrückt und verschieben dabei über die Konusfläche den Druckring gegen die Wirkung der in ihrer Federkraft einstellbaren Federn um unter radialer Verschiebung in den durchgehenden Schlitzen des Kupplungsrings, schliesslich auf der, den Konus umgebenden schmalen Stirnkante des Druckrings zu liegen zu kommen.

Abgesehen davon, dass diese bekannte Überlastkupplung lediglich für Anordnungen mit motorisch angetriebenem Kupplungsring einsetzbar ist, also nicht für Kupplungen mit angetriebenem Futterkörper, besteht bei dieser Überlastkupplung der entscheidende Nachteil, dass keine stabile Ausrastposition gegeben ist. Die Ausrastposition ist in ihrer Stabilität abhängig von der Exaktheit des Laufens der Kugeln in der Ausrastposition auf der schmalen, den Innenkonus des Druckrings umgebenden Kante. Hinzu kommt noch, dass diese schmale Kante infolge der sehr starken Kräfte bei häufigem Ansprechen der Überlastkupplung unvermeidbar starken Abnutzungserscheinungen unterliegt, die dazu führen, dass eine solche Überlastkupplung bereits nach relativ kurzer Gebrauchsdauer nicht mehr funktionsfähig ist.

Eine aus der GB-A 1 415 138 bekannt gewordene Kupplungseinrichtung mit zwischen den Mantelflächen des Kupplungsrings und des Futterkörpers angeordneter Kugeltaschenkupplung sieht neben den Kugeltaschen in der Aussen-Mantelfläche des Futterkörpers eine versetzte umlaufende Ausrast-Ringnut vor, die über eine geneigte Nut mit den Kugeltaschen verbunden ist. Bei Überlast laufen die, in einer gegenüber der Verbindungsnut schräggestellten Ausnehmung des Kupplungsrings sich verschiebenden, Kupplungskugeln in diese Ausrast-Ringnut ein. Diese bekannte Anordnung hat jedoch zum einen den Nachteil, dass bei einem im Laufe der Zeit unvermeidlichen Ausschlagen der Ausrast-Ringnut im Einmündungsbereich der Stichnut zu den Kugeltaschen ständig ein Schlagen auftritt. Darüber hinaus eignet sich diese Kupplung ausschliesslich – dies gilt in gleicher Weise auch für die bereits angesprochene Überlastkupplung nach der DE-B 25 11 148 – für mit nur einem Drehsinn arbeitende Gewindeschneidvorrichtungen. Durch die Schrägneigungen der jeweiligen Nuten bzw. Gegentaschen erfolgt bei beiden vorstehend beschriebenen Anordnungen bei einer Drehrichtungsumkehr sofort ein Wiedereinkuppeln ohne dass dann in dieser anderen Drehrichtung ein Auskuppeln möglich ist. Ein Auslegen gleichzeitig für die Gegendrehrichtung ist ersichtlich ausgeschlossen, da jeweils eine bestimmte Neigungsrichtung der Nuten gegenüber der Drehrichtung erforderlich ist.

Der Erfindung liegt daher die Aufgabe zugrunde, eine Überlastkupplung der eingangs genannten Art so auszugestalten, dass zum einen eine funktionsbeeinträchtigende Abnutzung im Betrieb nicht auftreten kann, und die Überlastkupplung gleichzeitig für beide Drehrichtungen eingesetzt werden kann.

Zur Lösung dieser Aufgabe ist erfindungsgemäss vorgesehen, dass die Kugeltaschen axial verlaufende Nuten sind und dass die Gegentaschen in beide Drehrichtungen in axial versetzte zum Druckring hin offene Ausrastrinnen einmünden, deren Boden im wesentlichen in einer zur Drehachse senkrechten Ebene verläuft und deren Breite im wesentlichen dem Durchmesser der Kupplungskugeln entspricht.

Durch die erfindungsgemässe Ausgestaltung bleiben die Kupplungskugeln nicht, wie bei der Anordnung nach der DE-B 25 11 148, in ein und derselben Querebene senkrecht zur Längsachse und verschieben sich lediglich nach aussen durch die offenen Schlitze des Kupplungsrings hindurch, sondern sie werden beim Ausrasten aus den Kugeltaschen durch Axial-Verschiebung – die ja erst durch die Ausbildung der Kugeltaschen als Nuten möglich ist – in die Ausrastrinnen axial verschoben.

Diese Ausbildung ermöglicht zum einen eine Ausbildung, bei der die Gegentaschen mit als Schrägrampen zu den axial versetzten Ausrastrinnen geneigt verlaufenden radialen Begrenzungsflächen versehen sind, was wiederum zur Folge hat, dass Neigungen in oder gegen die Drehrichtung vermieden werden, die ja ursächlich dafür sind, dass eine solche Überlastkupplung nur in einem Drehsinn funktionsfähig ist.

Das wiederum ermöglicht es beidseits der Gegentaschen Ausrastrinnen vorzusehen, so dass eine solche Überlastkupplung in gleicher Weise für Links- oder Rechtslauf einsetzbar ist. Darüber hinaus sind durch die erfindungsgemässe Ausgestaltung mit sowohl axialer, als auch radialer Verschiebung der Kupplungskugeln aus der Kupplungsstellung in die Ausraststellung unter Verwendung von als Schrägrampen ausgebildeten Begrenzungsflächen der Gegentaschen Druckringe einsetzbar, die eine durchgehend ebene zur Achse vorzugsweise senkrechte Stirnfläche aufweisen. Derartige ebene Druckringe unterliegen ersichtlich praktisch überhaupt keiner störenden Abnutzung im Betrieb. Insbesondere könnte eine irgendwie geartete Abnutzung, die lediglich in Form einer umlaufenden sich eindrückenden Rinne denkbar wäre, was aber wegen der Grossflächigkeit in der Praxis weitgehendst ausgeschlossen werden kann, zur keiner Funktionsbeeinträchtigung führen.

Die erfindungsgemässe Überlastkupplung lässt sich sowohl für Kupplungen mit angetriebenem Kupplungsring und einem durchgehenden Futterkörper einsetzen, wobei in diesem Fall als axiale Nuten ausgebildete Kugeltaschen in der Aussen-Mantelfläche des Futterkörpers und die Gegentaschen im Kupplungsring angeordnet sind. In gleicher Weise eignet sich die erfindungsgemässe Konstruktion aber auch für Kupplungen mit angetriebenem geteilten Futterkörper, wobei der mit dem motorseitigen Abschnitt drehfest verbundene Kupplungsring in seiner Innenmantelfläche mit den nutförmig axial verlaufenden Kugeltaschen versehen sein soll, während die Gegentaschen in den Aussen-Mantelfläche des werkzeugseitigen Abschnitts des Futterkörpers angeordnet sind.

Schliesslich verläuft erfindungsgemäss der Boden der Ausrastrinnen in einer im wesenlchen zur Drehachse senkrechten Ebene. Die stabile Ausraststellung der Kupplungskugeln, d.h. das Verbleiben der Kupplungskugeln in diesen Ausrastrinnen, so dass sie nicht periodisch beim Weiterdrehen in die Kugeltaschen des Gegenteils eintreten können, was zu einem Schlagen der Kupplung führen würde, ergibt sich durch die geringe Reibungskraft mit der die Kugeln in den ja radial offen Ausrastrinnen entweder an der Aussen-Mantelfläche des Bohrfutters oder der Innen-Mantelfläche des Kupplungsrings anliegen, so dass sie aufgrund dieser Mitnahmekraft stets in Richtung des der Gegentasche abgelegenen Endes der Ausrastrinnen gedrückt werden. Durch kurzzeitige Drehrichtungsumkehr erfolgt ein Zurückbewegen der Kupplungskugeln in die Gegentaschen, wobei dies auch für die Anordnung mit beidseitigen Überlastrinnen gilt. Das Ausmass der Reibungskraft, welche die Kugeln stabil in der Ausrastposition hält, ist durch die Tiefe der Ausrastrinne gegeben und verändert sich durch Verstellen des Druckes auf die Kupplung mittels der veränderlichen Vorspannung der Tellerfedern.

Die Erfindung soll nachstehend an zwei Ausführungsbeispielen sowie anhand der Zeichnung weiter erläutert werden. Dabei zeigen;

Fig. 1 einen Längsschnitt durch einen Schnellwechseleinsatz insbesondere für Gewindeschneidfutter mit einer erfindungsgemäss ausgebildeten Überlastkupplung,

Fig. 2 einen Querschnitt längs der Linie II–II in Fig. 1,

Fig. 3 eine vergrösserte Detailansicht einer der Kugeltaschen in der Schnittdarstellung nach Figur 2,

Fig. 4 einen Schnitt längs der Linie IV–IV in Figur 3,

Fig. 5 und 6 sowie

Fig. 7 und 8 jeweils den Figuren 3 und 4 entsprechende Schnitte in einer Zwischenstellung während des Ausrastens der Kupplungskugel bzw. in der stabilen Ausrastposition,

Fig. 9 eine teilweise geschnittene Seitenansicht durch ein Futter mit einer erfindungsgemässen Kupplungseinrichtung bei angetriebenem Futterkörper,

Fig. 10 eine Querschnitt längs der Schnittlinie X–X in Fig. 9 und

Fig. 11 bis 16 den Figuren 3 bis 8 entsprechend vergrösserte Schnitte durch die gegenüber den Figuren 1 bis 8 quasi spiegelbildliche Anordnung der Kugeltaschenkupplung nach Figur 9.

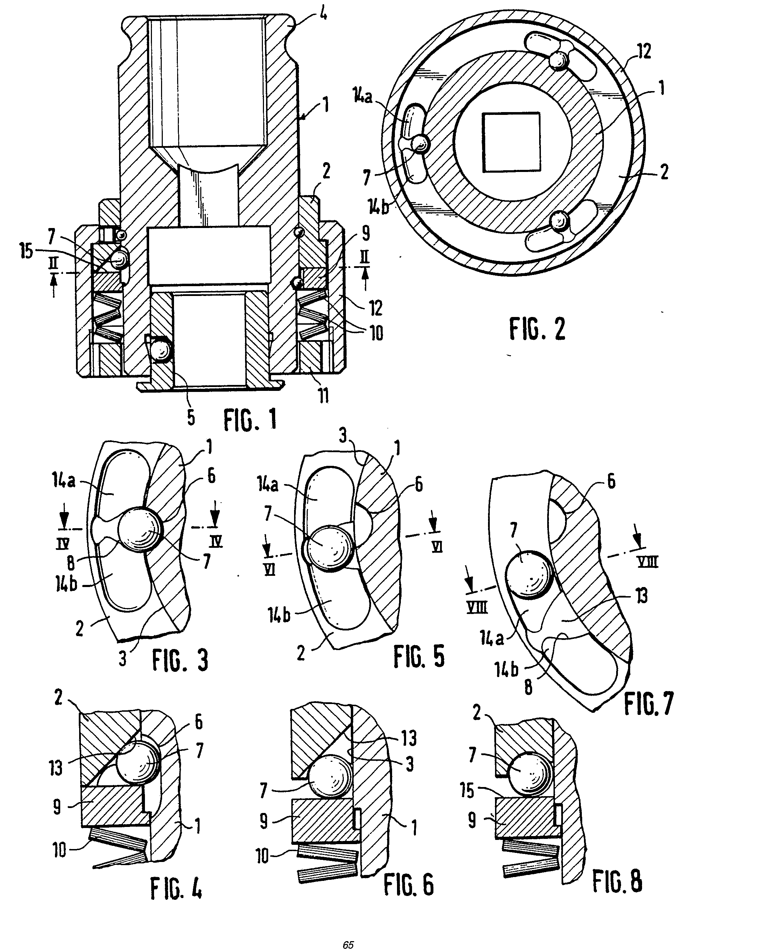

Die Figuren 1 bis 8 zeigen einen Schnellwechseleinsatz mit einer erfindungsgemässen Überlastkupplung bei welcher der den durchgehenden Futterkörper 1 koaxial umgebende Kupplungsring 2 angetrieben wird. Dies ist im einzelnen nicht dargestellt, ebensowenig wie im folgenden Teile beschrieben werden sollen, die bei solchen Einsätzen üblicherweise verwendet werden, wie beispielsweise Kugellager oder dergleichen. In der Aussen-Mantelfläche 3 des Futterkörpers 1, der mit seinem oberen Schaftabschnitt 4 in die Maschine eingespannt wird, während in die Ausnehmung 5 ein Werkzeug, beispielsweise ein Gewindeschneidbohrer eingesetzt werden kann, sind als axial verlaufende, d.h. parallel zur Drehachse verlaufende, Nuten ausgebildete Kugeltaschen 6 eingebracht. Jeder Kugeltasche 6 des Futterkörpers 1 ist eine Gegentasche 8 des Kupplungsrings 2 zugeordnet, die gemeinsam eine Kupplungskugel 7 aufnehmen (vgl. insbesondere die Figuren 3 und 4), um eine Kupplung zwischen dem Futterkörper 1 und dem Kupplungsring 2 zu bewirken. Die Kupplungskugeln 7 stehen unter der Wirkung eines Druckrings 9, der von Tellerfedern 10 gegen die Kugeln gedrückt wird, die sich an einem starren Ring 11 einer mit dem Kupplungsring 2 verbundenen Hülse 12 abstützen. Unter der Wirkung des vorgespannten Druckrings 9 liegen die Kupplungskugeln in der Kupplungsstellung nach den Figuren 3 bis 4.

Bei Auftreten einer Überlast werden die Kugeln entlang der als Schrägrampe 13 ausgebildeten radialen Begrenzung der Gegentasche 8 axial verschoben und drücken dabei den Druckring 9 gegen die Wirkung der Tellerfedern 10 in Figur 1 nach unten. Dadurch gelangen sie – je nach der Drehrichtung – in eine der axial gegenüber der Gegentasche 8 versetzten, zum Druckring 9 hin offenen Überlastrinnen 14a oder 14b in der Stirnfläche 15 des Kupplungsrings 2. Infolge der Reibungskraft der an der Stirnfläche 15 des Druckrings 9 anliegenden Kupplungskugel 7 (vgl. insbesondere Figur 6) wird die Kupplungskugel zum Ende der jeweiligen Ausrastrinne 14a, 14b bewegt, so dass sie darin in einer stabilen Ausraststellung bleibt solange unterschiedliche Drehgeschwindigkeiten zwischen Futterkörper und Kupplungsring bestehen, wie es ja nach einer Überlastausrastung der Fall ist. Diese stabile Ausraststellung ist am besten aus den Figuren 7 und 8 zu erkennen.

Das Wiedereinrasten der Kupplung nach einem Überlastfall erfolgt durch kurzzeitige Drehrichtungsumkehr, wobei die Kugeln 7 aufgrund des verbliebenen, restlichen axialen Anpressdrucks auf die Stirnfläche 15 des Druckrings 9 wieder zu den Gegentaschen 8 und aus diesen bei Erreichen der gleichen Stellung in die Kugeltaschen 6 einrasten, wodurch der Drehmomentschluss der Kupplung wiederhergestellt ist.

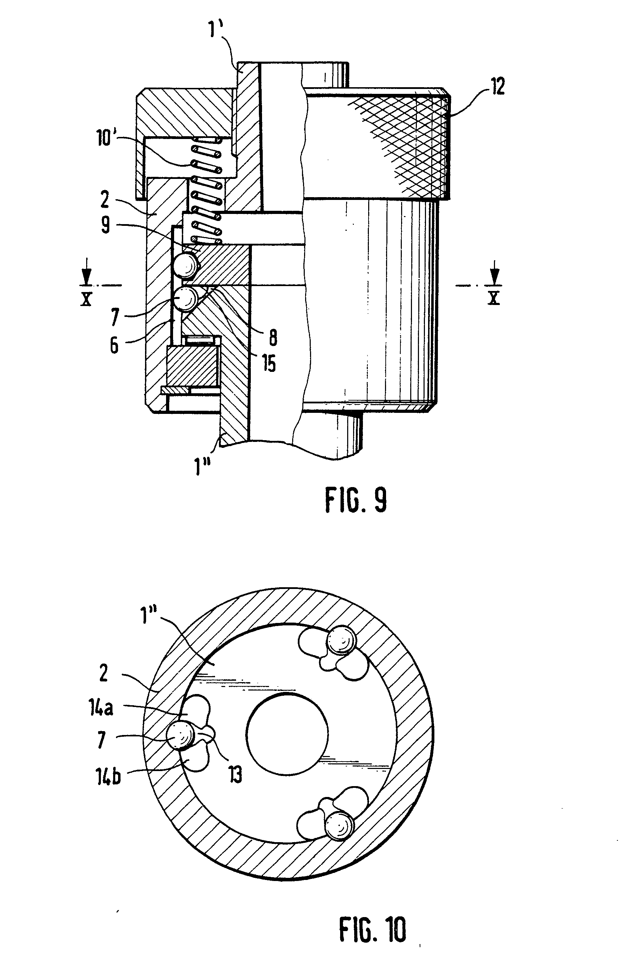

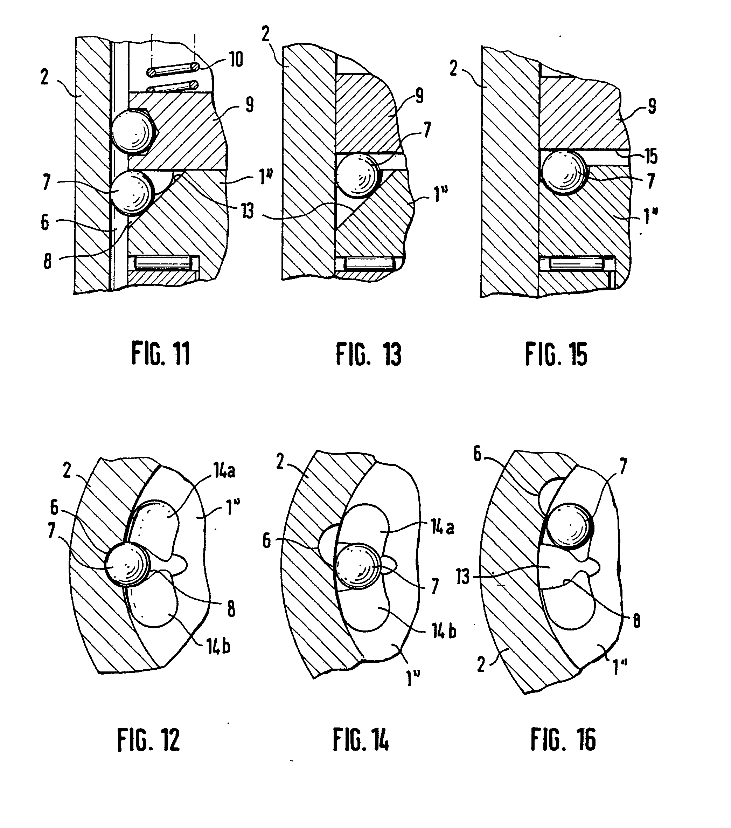

Die Anordnung nach den Figuren 9 bis 16 unterscheidet sich von der Anordnung der Figuren 1 bis 8 im wesentlichen dadurch, dass es sich um eine Version mit angetriebenem Futterkörper handelt, wobei er in diesem Fall selbstverständlich in zwei Teile 1' und 1" unterteilt ist, von denen der erstere in die Maschine eingespannt wird, während der letztere zur Aufnahme des eigentlichen Werkzeuges dient, Der mit dem antriebsseitigen Abschnitt 1' des Futterkörpers fest verbundene Kupplungsring 2 nimmt – in quasi kinematischer Umkehr der Kupplungsausbildung nach den Figuren 1 bis 8 – die als axiale Nuten ausgebildeten Kugeltaschen 6 auf, während die Gegentaschen 8 in diesem Fall in der Aussen-Mantelfläche des werkzeugseitigen Abschnitts 1' und 1" des Futterkörpers angeordnet sind. Ansonsten entspricht die Ausbildung – unter Beachtung der umgekehrten Anordnung von Kugeltaschen und Gegentaschen vollständig der Version der Figuren 1 bis 8. Die als axiale Nuten ausgebildeten Kugeltaschen 6 werden bei der Anordnung nach Figur 9 gleichzeitig als Lagernuten zur kugelgelagerten drehfesten Verbindung des Druckrings 9 mit dem Kupplungsring 2 verwendet. Anstelle der Tellerfedern 10 sind bei der Ausführungsform nach Figur 9 Wendeldruckfedern 10' eingesetzt.

## Patentansprüche

1. Überlastkupplung, insbesondere für Gewindeschneidfutter oder deren Schnellwechseleinsätze, mit einem zylindrischen Kupplungsring (2) und einem koaxial innerhalb des Kupplungsrings gehaltenen Futterkörper (1), mit einer zwischen der Innen-Mantelfläche des Kupplungsrings (2) und der Aussen-Mantelfläche (3) des Futterkörpers angeordneten Kugeltaschenkupplung mit einstellbarem auslösenden Drehmoment, wobei eine der Mantelflächen Kugeltaschen (6) mit gegenüber dem Durchmesser der Kupplungskugeln geringerer Tiefe aufweist, während in die Gegenmantelfläche Gegentaschen (8) mit Ausrasterweiterungen vorgesehen sind, in welche die Kupplungskugeln bei Überlast gegen die Wirkung eines federbelasteten axial, im Kupplungsring verschiebbaren Druckrings (9) in eine stabile Ausrastposition ausweichen können, dadurch gekennzeichnet, dass die Kugeltaschen (6) axial verlaufende Nuten sind und dass die Gegentaschen (8) in beide Drehrichtungen in axial versetzte zum Druckring (9) hin offene Ausrastrinnen (14a, 14b) einmünden, deren Boden im wesentlichen in einer zur Drehachse senkrechten Ebene verläuft und deren Breite im wesentlichen dem Durchmesser der Kupplungskugeln (7) entspricht.

2. Überlastkupplung nach Anspruch 1, dadurch gekenzeichnet, dass der Druckring (9) eine durchgehend ebene zur Achse vorzugsweise senkrechte Stirnfläche (15) aufweist.

3. Überlastkupplung nach einem der Ansprüche 1 oder 2, dadurch gekennzeichnet, dass die Gegentaschen (8) mit als Schrägrampen (13) zu den axial versetzten Ausrastrinnen geneigt verlaufenden radialen Begrenzungsflächen versehen sind.

4. Überlastkupplung nach einem der Ansprüche 1 bis 3, dadurch gekennzeichnet, dass der Kupplungsring (2) eine um einen durchgehenden Futterkörper (1) drehbare Antriebshülse bildet in der die Gegentaschen (8) angeordnet sind.

5. Überlastkupplung nach einem der Ansprüche 1 bis 4, dadurch gekennzeichnet, dass der Futterkörper (1', 1") geteilt ist und der mit dem motorseitigen Abschnitt (1') drehfest verbundene Kupplungsring (2) in seiner Innen-Mantelfläche mit den nutförmigen axial verlaufenden Kugeltaschen (6) versehen ist, während die Gegentaschen (8) in der Aussen-Mantelfläche des werkzeugseitigen Abschnitts (1") des Futterkörpers angeordnet sind.

## Revendications

1. Accouplement de surcharge, notamment pour des mandrins de filetage ou pour leurs inserts à serrage rapide, comportant une bague d'accouplement cylindrique (1) et un corps de mandrin (1) maintenu coaxialement à l'intérieur de la bague d'accouplement, et un accouplement muni de logements pour billes, disposé entre la surface enveloppe intérieure de la bague d'accouplement (2) et la surface enveloppe extérieure (3) du corps du mandrin et transmettant un couple réglable pouvant être supprimé, l'une des surfaces enveloppes comportant des logements (6) pour billes, possédant une profondeur inférieure au diamètre des billes d'accouplement, tandis que dans la surface enveloppe opposée, il est prévu des logements opposés (8) qui comportent des extensions de désencliquetage dans lesquels, dans le cas d'une surcharge, les billes d'accouplement peuvent s'écarter pour venir dans une position désencliquetée stable, à l'encontre de l'action d'une bague de serrage (9) chargée par un ressort et déplaçable axialement dans la bague d'accouplement, caractérisé en ce que les logements (6) pour les billes sont des rainures axiales et que les logements opposés (8) débouchent, dans les deux sens de rotation, dans des canaux de désencliquetage (14a, 14b) décalés axialement et s'ouvrant en direction de la bague de serrage (9), et dont le fond s'étend sensiblement dans un plan perpendiculaire à l'axe de rotation et dont la largeur correspond sensiblement au diamètre des billes d'accouplement (7).

2. Accouplement de surcharge selon la revendication 1, caractérisé en ce que la bague de serrage (9) possède une surface frontale (15) unifomément plane, de préférence perpendiculaire à l'axe.

3. Accouplement de surcharge selon l'une des revendications 1 ou 2, caractérisé en ce que les logements opposés (8) sont équipés de surfaces limites radiales en forme de rampes obliques (13) inclinées par rapport aux canaux de désencliquetage décalés axialement.

4. Accouplement de surcharge selon l'une des revendications 1 à 3, caractérisé en ce que la bague d'accouplement (2) forme un manchon d'entraînement, qui peut tourner autour d'un corps de mandrin 1) et dans lequel sont disposés les logements opposés (8).

5. Accouplement de surcharge selon l'une des revendications 1 à 4, caractérisé en ce que le corps de mandrin 1', 1'') est subdivisé et la bague d'accouplement (2), reliée avec blocage en rotation à la section (1') située du côté du moteur, comporte, dans sa surface enveloppe intérieure, des logements (6) pour billes, qui s'étendent axialement sous la forme de rainures, tandis que les logements opposés (8) sont ménagés dans la surface enveloppe extérieure de la section (1''), située du côté de l'outil, du corps de mandrin.

**Claims**

1. Overload clutch, in particular for thread cutting chucks or their quick-change inserts, with a cylindrical clutch ring (2), a chuck body (1), which is held coaxially inside the clutch ring, and a ball pocket clutch, which is arranged between the inner surface of the clutch ring (2) and the outer surface (3) of the chuck body, with an adjustable releasing torque, one of the surfaces compirisng ball pockets (6) of a depth which is less than the diameter of the clutch balls, while counter-pockets (8) with disengagement enlargements are provided in the counter-surface, into which counter-pockets the clutch balls can move into a stable disengaged position upon overloading against the action of a spring-loaded thrust ring (9) which can be axially displaced in the clutch ring, characterised in that the ball pockets (6) are axially extending grooves and that the counter-pockets (8) lead in both directions of rotation into axially offset disengagement channels (14a, 14b) which are open towards the thrust ring (9), the bottom of which extends essentially in a plane normal to the axis of rotation and the width of which corresponds essentially to the diameter of the clutch balls (7).

2. Overload clutch according to claim 1, characterised in that the thrust ring (9) comprises a front face (15) which is entirely plane and preferably normal to the axis.

3. Overload clutch according to either of claims 1 or 2, characterised in that the counter-pockets (8) are provided with radial boundary surfaces which extend as ramps (13) which are inclined towards the axially offset disengagement channels.

4. Overload clutch according to one of claims 1 to 3, characterised in that the clutch ring (2) forms a drive sleeve which can rotate about a continuous chuck body (1) and in which the counter-pockets (8) are arranged.

5. Overload clutch according to one of claims 1 to 4, characterised in that the chuck body (1', 1'') is split and the inner surface of the clutch ring (2), which is nonrotatably connected to the section (1') on the motor side, is provided with the ball pockets (6) extending axially in the shape of grooves, while the counter-pockets (8) are arranged in the outer surface of the chuck body section (1'') on the toll side.

FIG. 1

FIG. 2

FIG. 3

FIG. 5

FIG. 7

FIG. 4

FIG. 6

FIG. 8

FIG. 9

FIG. 10

FIG. 11

FIG. 13

FIG. 15

FIG. 12

FIG. 14

FIG. 16